## Europäisches Patentamt

(19) **European Patent Office**

**Office européen des brevets**

(11) Veröffentlichungsnummer: **0 040 323**
**B1**

(12) **EUROPÄISCHE PATENTSCHRIFT**

(45) Veröffentlichungstag der Patentschrift:
**12.09.84**

(21) Anmeldenummer: **81102800.0**

(22) Anmeldetag: **11.04.81**

(51) Int. Cl.³: **G 01 N 27/72,** G 01 N 15/04,
B 03 B 5/28, B 03 C 1/00,
G 01 R 33/12

(54) Prüfverfahren für ferromagnetische Pulver.

(30) Priorität: 16.05.80 DE 3018639

(43) Veröffentlichungstag der Anmeldung:
**25.11.81 Patentblatt 81/47**

(45) Bekanntmachung des Hinweises auf die Patenterteilung:
**12.09.84 Patentblatt 84/37**

(84) Benannte Vertragsstaaten:
**AT DE FR GB IT**

(56) Entgegenhaltungen:
**US - A - 3 896 660**
**US - A - 3 985 646**

**Sonderdruck aus der Zeitschrift für Erzbergbau
undMetallhüttenwesen-Band XVIII(1965), Heft 4, Seiten
183-191/Akte S.39-47**
**"Stahl und Eisen" 74 (1954), Seiten 1070 und 1071 (No.
17, 12 August)**
**Soviet Invention Illustrated Week B 32, 21 September
1979 Section R16**

**Die Akte enthält technische Angaben, die nach dem
Eingang der Anmeldung eingereicht wurden und die
nicht in dieser Patentschrift enthalten sind.**

(73) Patentinhaber: **HOECHST AKTIENGESELLSCHAFT,
Postfach 80 03 20, D-6230 Frankfurt am Main 80 (DE)**

(72) Erfinder: **Uhle, Karlheinz, Dr., Wittelsbacher Strasse 23,
D-5040 Brühl (DE)**
Erfinder: **Krämer, Horst, Dr., Krimhildstrasse 3,
D-5030 Hürth-Hermülheim (DE)**

### Beschreibung

Die vorliegende Erfindung betrifft ein Prüfverfahren für in Schwertrüben zur Aufbereitung von Mineralien nach dem Sink- und Schwimmverfahren eingesetzte ferromagnetische Pulver in bezug auf die Effizienz ihrer Magnetscheidung und Entmagnetisierung, bei dem die Schwertrübe nach Gebrauch einem, einen Magnetabscheider aufweisenden Reinigungskreislauf zugeführt wird.

Als Sink-Schwimm-Aufbereitung bezeichnet man die Trennung von Mineralien verschiedener Dichte mit der wässrigen Suspension eines Schwerstoffes, der sog. Schwertrübe, deren spezifisches Gewicht zwischen den Dichten der zu trennenden Mineralien liegt, wodurch beim Einbringen des Mineralgemenges in die Schwerstoff-Suspension der leichtere Anteil aufschwimmt, während der schwerere Anteil absinkt. Da ein Teil der Schwerstoff-Suspension am aufgeschwommenen und am abgesunkenen Anteil anhaftet, werden beide Anteile nach ihrer Trennung intensiv abgebraust, so dass der vorher anhaftende Schwerstoff in Form einer verdünnten Suspension zurückgewonnen wird. Die Abtrennung des Schwerstoffes aus dieser verdünnten Suspension ist wegen der geringen Korngrösse des Schwerstoffes beispielsweise durch Filtration nicht möglich. Deswegen werden als Schwerstoffe bevorzugt ferromagnetische Pulver verwendet,welche aus der verdünnten Suspension durch Magnetscheidung zurückgewonnen und darüberhinaus von unmagnetischen Verunreinigungen befreit werden können. So eignet sich in erster Linie Magnetit zur Herstellung von Schwerstoff-Suspensionen mit niedrigem und Ferrosilicium mit 8 bis 25% Si zur Herstellung von solchen mit höherem spezifischen Gewicht, wobei der Kornbereich der durch Verdüsen oder Vermahlen hergestellten Schwerstoffe zwischen 0,001 und 0,4 mm liegt. Die zurückgewonnenen Schwerstoffe, welche durch die Magnetscheidung magnetisiert werden, müssen vor ihrem erneuten Einsatz zur Bereitung von Schwerstoff-Suspensionen entmagnetisiert werden, da magnetisierte Pulver keine stabilen Suspensionen bilden. Die Entmagnetisierung des zurückgewonnenen Schwerstoffes erfolgt durch Abmagnetisierung im magnetischen Wechselfeld (vergl. «Stahl und Eisen», 74 [1954]), Seiten 1070 bis 1075). Je nach Produktionslage und in Abhängigkeit von Qualität und Menge der Ausgangsmaterialien können Schwerstoff-Pulver mit mehr oder weniger guten magnetischen Eigenschaften hergestellt werden, was Auswirkungen auf ihre Fähigkeit hat, im Wechselfeld entmagnetisiert zu werden. Besonders wenn zur Erhöhung der Korrosionsbeständigkeit des Schwerstoffes weitere Komponenten, beispielsweise bei Ferrosilicium ausser Kohlenstoff noch Phosphor, Kupfer, Aluminium u. a., zugesetzt werden (vergl. DE-C-972 687 und DE-C-2 222 657), entsteht ein bezüglich seiner magnetischen Eigenschaften unübersichtliches Vielstoffsystem.

Es ist daher Aufgabe der vorliegenden Erfindung, ein einen geringen Messaufwand erforderndes Prüfverfahren anzugeben, welches die Beurteilung von in Schwertrüben zur Aufbereitung von Mineralien nach dem Sink-Schwimm-Verfahren eingesetzten ferromagnetischen Pulvern in bezug auf die Effizienz ihrer Magnetscheidung und Entmagnetisierung erlaubt. Ein solches Verfahren ist erfindungsgemäss dadurch gekennzeichnet, dass man

a) aus dem Reinigungskreislauf unmittelbar nach der Magnetscheidung Schwertrübe entnimmt und nach Dekantieren von Verunreinigungen die relative Sinkgeschwindigkeit dieser Trübe mit Hilfe eines Sedimentometers bestimmt;

b) aus dem Reinigungskreislauf nach der Entmagnetisierung Schwertrübe entnimmt und nach Dekantieren von Verunreinigungen die relative Sinkgeschwindigkeit dieser Trübe mit Hilfe eines Sedimentometers bestimmt;

c) die Schwertrübe nach b) in einem zyklisch abnehmenden magnetischen Wechselfeld mit einer maximalen Feldstärke, welche das 1,1 bis 1,5fache der maximalen Feldstärke am Magnetabscheider beträgt, entmagnetisiert und anschliessend die relative Sinkgeschwindigkeit mit Hilfe eines Sedimentometers bestimmt;

wobei das eingesetzte ferromagnetische Pulver wirksam magnetscheidbar und mit Hilfe einer Entmagnetisierungseinrichtung wirkungsvoll entmagnetisierbar ist, wenn die relative Sinkgeschwindigkeit nach a) mindestens zehnmal grösser ist als die nach c) und die relative Sinkgeschwindigkeit nach c) höchstens 10% unter der von b) liegt.

Dabei kann die maximale Feldstärke des Wechselfeldes das 1,4fache der maximalen Feldstärke am Magnetabscheider betragen.

Mit dem Prüfverfahren gemäss der vorliegenden Erfindung kann in kurzer Prüfzeit unter Einsatz kleiner Probemengen eine quantitative Aussage gemacht werden, ob ein in Schwertrüben eingesetztes ferromagnetisches Pulver einerseits magnetisierbar genug ist, um durch Magnetscheidung zuverlässig von wässriger Phase abgetrennt werden zu können, und ob dieses Pulver andererseits magnetisch weich genug ist, um hinreichend entmagnetisiert werden zu können.

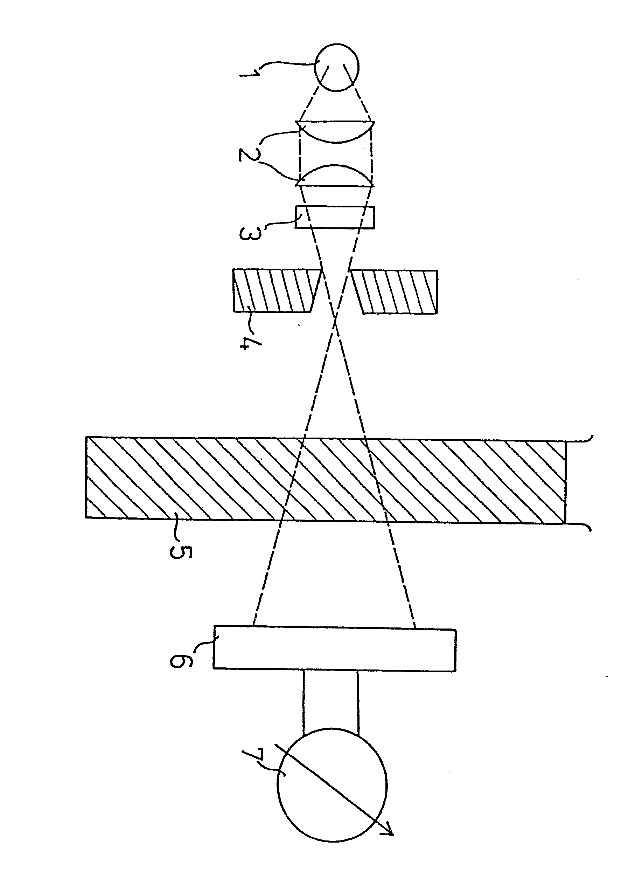

In der beigefügten Zeichnung ist der Aufbau des beim erfindungsgemässen Prüfverfahren verwendeten Sedimentometers schematisch wiedergegeben.

Von einer als Lichtquelle 1 dienenden Niedervoltlampe fällt Licht auf ein aus mehreren Linsen bestehendes Kollektorsystem 2. Der das Kollektorsystem 2 verlassende Lichtstrahl trifft nach Passieren eines Wärmeabsorptionsfilters 3 und einer Spaltblende 4 auf einen Glaszylinder 5, in welchem sich Trübe befindet. Der den Glaszylinder 5 durchdringende Teil des Lichtstrahls trifft auf eine Photozelle 6, welche mit einem Messinstrument 7 elektrisch leitend verbunden ist.

In Abhängigkeit von der Sinkgeschwindigkeit des Pulvers in der Trübe beginnt das Messinstrument 7 dann auszuschlagen, wenn die letzten Pulverteilchen mit grösstem Durchmesser gerade vorbeigefallen sind.

Beim Prüfverfahren gemäss der Erfindung werden zur Bestimmung der Sinkgeschwindigkeit der Abstand zwischen der Spaltblende 4 und dem Spiegel der Trübe im Glaszylinder 5 sowie der Zeitraum vom Einsetzen des mit unmittelbar vorher frisch aufgeschüttelter Trübe gefüllten Glaszylinders 5 in das Sedimentometer bis zum erreichen eines festgelegten Ausschlages des Messinstrumentes 7 herangezogen. Dabei entspricht der festgelegte Ausschlag 10% des Ausschlages am Messinstrument 7, welcher angezeigt wird, wenn der Glaszylinder 5 mit feststofffreiem Wasser gefüllt ist.

Beispiel 1

Eine aus dem Reinigungskreislauf für Schwerstoff (Ferrosilicium mit 12,5% Silicium und 1% Phosphor) unmittelbar hinter der Magnetscheidung entnommene Trübeprobe wurde nach Dekantieren der Verunreinigungen aufgeschüttelt. Ein Teil dieser aufgeschüttelten Probe wurde in ein Reagenzglas von 18 cm Länge und 18 mm innerem Durchmesser bis zu einer Füllhöhe von 16 cm eingefüllt. Vor dem Einsetzen des Reagenzglases in ein Sedimentometer wurde die Probe erneut aufgeschüttelt. 3 Sekunden nach Einsetzen des Reagenzglases wurde am Messinstrument des Sedimentometers ein Photostrom von 0,3 µA abgelesen. Aus diesem Wert und dem Abstand zwischen dem Trübespiegel und der Spaltblende von 8 cm wurde eine relative Sinkgeschwindigkeit von 2,7 cm/s errechnet.

Ebenso wurde die relative Sinkgeschwindigkeit einer Trübeprobe aus dem Reinigungskreislauf für Schwerstoff nach der Entmagnetisierung zu 0,067 cm/s bestimmt bzw. errechnet. Anschliessend wurde nach Abmagnetisierung dieser Probe in einem Wechselfeld, dessen maximale Feldstärke das 1,4fache der Feldstärke am Magnetscheider betrug, deren relative Sinkgeschwindigkeit zu 0,065 bestimmt bzw. errechnet.

Beispiele 2 bis 4

Das Beispiel 1 wurde wiederholt, wobei jedoch die Stromaufnahme der betrieblichen Entmagnetisierungsspule im Entmagnetisierungskreislauf verändert wurde.

In der folgenden Tabelle sind die Ergebnisse der Beispiele 1 bis 4 zusammengefasst, wobei als Mass für die Stromaufnahme der betrieblichen Entmagnetisierungsspule der Ausschlag ihres Ampere-Meters in Skalenteilen angegeben ist, und wobei grössere Skalenteile höheren Stromaufnahmen entsprechen. Im übrigen bedeutet in der Tabelle

I     Unmittelbar hinter der Magnetscheidung entnommene Trübeprobe,

II     hinter der Entmagnetisierungsspule entnommene Trübeprobe,

III     Probe zu II in einem Wechselfeld abmagnetisiert, dessen maximale Feldstärke das 1,4fache der maximalen Feldstärke am Magnetscheider betrug.

| Beispiel | Stromaufnahme Entmagnetisierungs- spule (Skalenteile) | relative Sinkgeschwindigkeit (cm/s) | | |
|---|---|---|---|---|
| | | I | II | III |
| 1 | 3 | 2,7 | 0,067 | 0,065 |
| 2 | 4 | 2,6 | 0,065 | 0,065 |
| 3 | 2 | 2,6 | 0,071 | 0,065 |
| 4 | 1 | 2,6 | 0,285 | 0,064 |

Bei den Schwertrüben nach den Beispielen 1 bis 3 sind die relativen Sinkgeschwindigkeiten von I mehr als zehnmal grösser als von II und die Differenzen der relativen Sinkgeschwindigkeiten von II und III betragen weniger als 10%. Die im Reinigungskreislauf befindliche Ferrosilicium-Schwertrübe ist bei den gewählten Einstellungen der Stromaufnahme der betrieblichen Entmagnetisierungsspule wirksam magnetscheidbar und entmagnetisierbar.

Im Gegensatz dazu ist bei der Schwertrübe nach Beispiel 4 die relative Sinkgeschwindigkeit von I nur neunmal grösser als die von II und die Differenz von II und III beträgt erheblich mehr als 10%. Mithin wird bei dieser Einstellung der Stromaufnahme der betrieblichen Entmagnetisierungseinrichtung die Schwertrübe nicht mehr ausreichend entmagnetisiert.

**Patentansprüche**

1. Prüfverfahren für in Schwertrüben zur Aufbereitung von Mineralien nach dem Sink- und Schwimmverfahren eingesetzte ferromagnetische Pulver in bezug auf die Effizienz ihrer Magnetscheidung und Entmagnetisierung, bei dem die Schwertrübe nach Gebrauch einem, einen Magnetabscheider aufweisenden Reinigungskreislauf zugeführt wird, dadurch gekennzeichnet, dass man

a) aus dem Reinigungskreislauf unmittelbar nach der Magnetscheidung Schwertrübe entnimmt und nach Dekantieren von Verunreinigungen die relative Sinkgeschwindigkeit dieser Trübe mit Hilfe eines Sedimentometers bestimmt;

b) aus dem Reinigungskreislauf nach der Entmagnetisierung Schwertrübe entnimmt und nach Dekantieren von Verunreinigungen die relative Sinkgeschwindigkeit dieser Trübe mit Hilfe eines Sedimentometers bestimmt;

c) die Schwertrübe nach b) in einem zyklisch abnehmenden magnetischen Wechselfeld mit einer maximalen Feldstärke, welche das 1,1 bis 1,5fache der maximalen Feldstärke am Magnetabscheider beträgt, entmagnetisiert und anschliessend die relative Sinkgeschwindigkeit mit Hilfe eines Sedimentometers bestimmt;

wobei das eingesetzte ferromagnetische Pulver wirksam magnetscheidbar und mit Hilfe einer Entmagnetisierungseinrichtung wirkungsvoll entmagnetisierbar ist, wenn die relative Sinkgeschwindigkeit nach a) mindestens zehnmal grösser ist als die nach b) und die relative Sinkgeschwindigkeit nach c) höchstens 10% unter der von b) liegt.

2. Prüfverfahren nach Anspruch 1, dadurch gekennzeichnet, dass die maximale Feldstärke des Wechselfeldes das 1,4fache der maximalen Feldstärke am Magnetabscheider beträgt.

## Claims

1. Method permitting ferromagnetic powders for use in heavy medium suspensions for the float sink dressing of minerals to be tested as to their efficiency in magnetic separation and demagnetization, wherein the heavy medium suspension is admitted, after use, to a purification cycle presenting a magnetic separator, which comprises:

a) removing a heavy medium suspension specimen from the purification cycle directly downstream of the magnetic separation stage, freeing the specimen from impurities by decantation, and determining its relative sedimentation velocity with the aid of a sedimentometer;

b) removing a heavy medium suspension specimen from the purification cycle downstream of the demagnetization stage, freeing the specimen from impurities by decantation, and determining its relative sedimentation velocity with the aid of a sedimentometer; and

c) demagnetizing the heavy medium suspension specimen according to b) in a cyclicly decreasing magnetic alternating field with a maximum field strength which is 1.1 to 1.5 times the maximum field strength in the magnetic separator, and determining its relative sedimentation velocity with the aid of a sedimentometer, the ferromagnetic powder being reliably separable magnetically and reliably demagnetizable with the aid of a demagnetizing means in the event of the relative sedimentation velocity according to a) being at least ten times greater than the relative sedimentation velocity according to b), and the relative sedimentation velocity according to c) being at most 10% lower than that according to b).

2. Testing method as claimed in claim 1, wherein the maximum field strength of the alternating field is 1.4 times the maximum field strength in the magnetic separator.

## Revendications

1. Méthode d'essai pour déterminer l'efficacité dans la séparation magnétique et dans la démagnétisation de poudres ferromagnétiques utilisées dans des liqueurs denses destinées à la préparation de minerais par flottation et sédimentation, dans laquelle la liqueur dense est amenée, après utilisation, à un cycle de prurification présentant un séparateur magnétique, caractérisée en ce que:

a) on prélève un échantillon de liqueur dense du cycle de purification aussitôt après la séparation magnétique et, après séparation d'impuretés par décantation, on détermine la vitesse relative de sédimentation de l'échantillon à l'aide d'un sédimentomètre;

b) on prélève un échantillon de liqueur dense du cycle de purification aussitôt après la démagnétisation et, après séparation d'impuretés par décantation, on détermine la vitesse relative de sédimentation de l'échantillon à l'aide d'un sédimentomètre;

c) on démagnétise l'échantillon de liqueur dense selon b) dans un champ alternatif diminuant cycliquement, d'une intensité de champ maximale de 1,1 à 1,5 fois l'intensité de champ maximale dans le séparateur magnétique, et on détermine ensuite la vitesse relative de sédimentation à l'aide d'un sédimentomètre; la poudre ferromagnétique utilisée pouvant être efficacement séparée magnétiquement et puissamment démagnétisée à l'aide d'un dispositif de démagnétisation si la vitesse de sédimentation selon a) est au moins 10 fois plus grande que celle selon b) et la vitesse de sédimentation relative selon c) est inférieure de 10% au plus à celle selon b).

2. Méthode d'essai selon la revendication 1, caractérisée en ce que l'intensité de champ maximale du champ alternatif est de 1,4 fois l'intensité de champ maximale dans le séparateur magnétique.